(19) Europäisches Patentamt / European Patent Office / Office européen des brevets

(11) **EP 4 468 504 A1**

(12) **EUROPEAN PATENT APPLICATION**
published in accordance with Art. 153(4) EPC

(43) Date of publication:
**27.11.2024 Bulletin 2024/48**

(21) Application number: **23886221.3**

(22) Date of filing: **31.10.2023**

(51) International Patent Classification (IPC):
**H01M 50/457** (2021.01)    **H01M 50/403** (2021.01)
**H01M 50/489** (2021.01)    **H01M 50/411** (2021.01)
**H01M 50/42** (2021.01)    **H01M 50/426** (2021.01)
**H01M 10/04** (2006.01)    **H01M 10/052** (2010.01)

(52) Cooperative Patent Classification (CPC):
**H01M 10/04; H01M 10/052; H01M 50/403;**
**H01M 50/411; H01M 50/42; H01M 50/426;**
**H01M 50/457; H01M 50/489;** Y02E 60/10

(86) International application number:
**PCT/KR2023/017147**

(87) International publication number:
**WO 2024/096525 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.11.2022 KR 20220143298**

(71) Applicant: **LG Energy Solution, Ltd.**
**Seoul 07335 (KR)**

(72) Inventors:
• **LEE, Ji Su**
  **Daejeon 34122 (KR)**
• **KIM, Hye Won**
  **Daejeon 34122 (KR)**
• **SUNG, Dong Wook**
  **Daejeon 34122 (KR)**
• **KA, Kyung Ryun**
  **Daejeon 34122 (KR)**

(74) Representative: **Hoffmann Eitle**
**Patent- und Rechtsanwälte PartmbB**
**Arabellastraße 30**
**81925 München (DE)**

(54) **SEPARATOR FOR SECONDARY BATTERY, PREPARATION METHOD THEREFOR, AND SECONDARY BATTERY COMPRISING SAME**

(57) There is provided a separator for a secondary battery, which simultaneously achieves uniform coatability of a binder slurry that is in a trade-off relationship and reduction in cell resistance. One embodiment of the present disclosure provides a separator for a secondary battery, including: a preliminary separator including a porous substrate and a coating layer disposed on one surface of the porous substrate; a first binder layer disposed on one surface of the coating layer; and a second binder layer disposed on the other surface of the porous substrate; wherein the first binder layer and the second binder layer each include the same or different surfactants, and satisfy Equation 1 below.

[Equation 1]

$$\Delta P(s/100cc) = |Ps - Pc| < 120$$

In Equation 1, Ps is an air permeability of the separator for a secondary battery, and Pc is an air permeability of the preliminary separator.

**FIG. 1**

EP 4 468 504 A1

**Description**

[Technical Field]

The present disclosure claims the benefits of the filing dates of Korean Patent Application No. 10-2022-0143298 submitted to the Korea Intellectual Property Office on November 1, 2022, and the entire content of which is included in the present disclosure.

The present disclosure relates to a separator for a secondary battery, and more specifically, to a separator for a secondary battery, a method for manufacturing the same, and a secondary battery including the same.

[Background Art]

As representative examples of secondary batteries, lithium ion batteries are representative energy devices with high energy density that are composed based on a cathode, a separator, an anode, and an electrolyte to enable charging and discharging while chemical energy and electrical energy are being reversibly converted, and are widely used in small-sized electronic equipment such as mobile phones and laptops. Recently, as responses to environmental issues, high oil prices, energy efficiency, and storage, applications for hybrid electric vehicles (HEV), plug-in electric vehicles (plug-in EV), electric bicycles (E-bikes), and energy storage systems (ESS) are rapidly expanding. Lithium-ion batteries are stable electrochemical devices insulated by a separator, but there is a possibility of heat generation and explosion due to short circuits occurring between the cathode and the anode due to internal or external battery abnormal phenomena or shocks so that ensuring the thermochemical safety of the separator as an insulator is the most important issue to consider.

Meanwhile, in order to improve the energy density of secondary batteries, thinning of the separator is required. Insulation properties and thermal stability can be increased by coating a porous substrate with a coating layer including inorganic particles, but to date, there is a lack of technology to uniformly coat inorganic particles of 100 nm or more to a thickness of less than 1.5 $\mu$m.

[Disclosure]

[Technical Problem]

An object of the present disclosure is to provide a separator for a secondary battery, which simultaneously achieves uniform coatability of a binder slurry that is in a trade-off relationship and reduction in cell resistance.

Another object of the present disclosure is to provide a separator for a secondary battery, which can effectively prevent defect phenomena such as folding of the separator by increasing the adhesive force to the electrode when manufacturing the electrode assembly due to heat and pressure.

A further object of the present disclosure is to provide a separator for a secondary battery, which can increase the energy density of the secondary battery by reducing the thickness of the separator by uniformly coating one surface of the porous substrate or coating layer with a binder slurry.

An even further object of the present disclosure is to provide a method for manufacturing the separator for a secondary battery, which has improved coatability of the binder slurry.

Still yet another object of the present disclosure is to provide a secondary battery including the separator for a secondary battery.

The objects of the present disclosure are not limited to the objects mentioned above, and other objects and advantages of the present disclosure that are not mentioned can be understood by the following description and will be more clearly understood by embodiments of the present disclosure. Additionally, it will be readily apparent that the objects and advantages of the present disclosure can be realized by means and combinations thereof as set forth in the claims.

[Technical Solution]

According to a first aspect of the present disclosure for achieving the above object, there is provided a separator for a secondary battery, including: a preliminary separator including a porous substrate and a coating layer disposed on one surface of the porous substrate; a first binder layer disposed on one surface of the coating layer; and a second binder layer disposed on the other surface of the porous substrate; wherein the first binder layer and the second binder layer each include the same or different surfactants, and satisfy Equation 1 below.

[Equation 1]

$$\Delta P(s/100cc) = |P_s - P_c| < 120$$

In Equation 1, $P_s$ is an air permeability of the separator for a secondary battery, and $P_c$ is an air permeability of the preliminary separator.

According to a second aspect of the present disclosure, the first binder layer and the second binder layer in the first aspect may each include the same or different particle-type binders. Here, the particle-type binder may be defined as a binder that does not dissolve in a solvent contained in a composition for forming a binder layer. For example, the particle-type binder in the solvent of the composition for forming a binder layer may have a solubility of 1 g/100 mL or less, 0.1 g/100 mL or less, 0.01 g/100 mL or less, or 0.001 g/100 mL or less; more preferably 0 g/100 mL.

According to a third aspect of the present disclosure, the particle-type binder in the second aspect may include a first particle-type binder and a second particle-type binder that is the same as or different from the first particle-type binder.

According to a fourth aspect of the present disclosure, the first and second particle-type binders in any one of the first to third aspects may each independently include: one compound selected from the group consisting of polyacrylate (PA), polyacrylic acid (PAA), poly(vinylidene fluoride) (PVDF), poly(vinylidene fluoride-co-hexafluoropropylene) (PVDF-HFP), poly(butyl acrylate) (PBA), polystyrene (PS), poly(methyl methacrylate) (PMMA), poly(ethylene oxide) (PEO), and polysiloxane; copolymers of two or more thereof; or mixtures of two or more thereof;

According to a fifth aspect of the present disclosure, the surfactants in any one of the second to fourth aspects may each independently be contained in an amount of more than 0 to less than 5.0 parts by weight based on 100 parts by weight of the particle-type binder.

According to a sixth aspect of the present disclosure, the surfactants in any one of the first to fifth aspects may include a nonionic surfactant.

According to a seventh aspect of the present disclosure, the nonionic surfactant in the sixth aspect may include one, or two or more selected from the group consisting of perfluoroalkyltriethyleneoxide methylether whose alkyl groups have 6 carbon atoms, polyoxyethylene alkyl ether, polyoxyethylene fatty acid ester, polyoxyethylene alkyl phenol ether, sorbitan fatty acid esters, polyoxyethylene sorbitan fatty acid esters, sucrose fatty acid esters, polyfluorobutane sulfonate, and polyethylene oxide-polypropylene oxide copolymer.

According to an eighth aspect of the present disclosure, the coating layer in any one of the first to seventh aspects may have a thickness of 0. 1 to 10 μm.

According to a ninth aspect of the present disclosure, the first and second binder layers in any one of the first to eighth aspects may each independently have a thickness of 0.05 to 10 μm.

According to a tenth aspect of the present disclosure, there is provided a method for manufacturing a separator for a secondary battery according to any one of the first to ninth aspects, the method including steps of: coating one surface of the coating layer with a first binder slurry and then drying the first binder slurry to form the first binder layer; and coating the other surface of the porous substrate with a second binder slurry and then drying the second binder slurry to form the second binder layer.

According to an eleventh aspect of the present disclosure, Equation 2 below in the tenth aspect may be satisfied.

[Equation 2]

$$C_A < 50°$$

In Equation 2, $C_A$ is a contact angle of the first binder slurry to one surface of the coating layer at 25°C.

According to a twelfth aspect of the present disclosure, Equation 3 below in the tenth or eleventh aspect may be satisfied.

[Equation 3]

$$C_B < 50°$$

In Equation 3, $C_B$ is a contact angle of the second binder slurry to the other surface of the porous substrate at 25°C.

According to a thirteenth aspect of the present disclosure, there is provided a secondary battery including: an anode; a cathode; the separator for a secondary battery according to any one of the first to ninth aspects, which is interposed between the anode and the cathode; and an electrolyte.

[Advantageous Effects]

According to one aspect of the present disclosure, it is possible to provide a separator that can improve the ease of coating of the binder slurry, and at the same time, reduces the resistance of the cell.

According to another aspect of the present disclosure, as the binder slurry is uniformly coated on one surface of the porous substrate or coating layer, the thickness of the separator can be reduced to increase the energy density of the secondary battery.

According to still another aspect of the present disclosure, when manufacturing an electrode assembly by heat and pressure, the adhesive force to the electrode increases, thereby effectively preventing defect phenomena such as folding of the separator.

Specific effects of the present disclosure along with the above-described effects are described together below while explaining specific details for carrying out the invention.

[Description of Drawings]

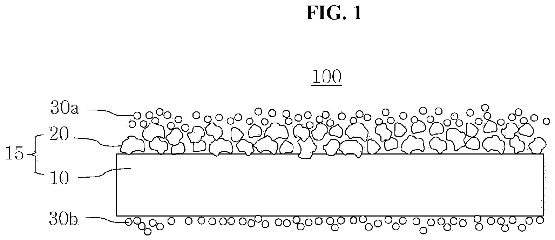

FIG. 1 is a vertical cross-sectional view of a separator for a secondary battery according to one embodiment of the present disclosure.

[Mode for Disclosure]

Hereinafter, each configuration of the present disclosure will be described in more detail so that those skilled in the art to which the present disclosure pertains can easily implement it, but this is only one example, and the scope of rights of the present disclosure is not limited by the following contents.

The range of numerical values expressed using the term 'to' in this specification denotes a range of numerical values that includes the values described before and after the term as a lower limit value and an upper limit value, respectively. When a plurality of numerical values as the upper and lower limits of an arbitrary numerical range are disclosed, the numerical range disclosed in this specification can be understood as a range of arbitrary numerical values including any one value among the plurality of lower limit values and any one value among the plurality of upper limit values as a lower limit value and an upper limit value, respectively. For example, when it is described as a to b, or c to d in the specification, it may be understood that a or more to b or less, a or more to d or less, c or more to d or less, or c or more to b or less is described.

In this specification, "a layer" or film may include, when observing a region in which the corresponding layer or film exists, a case where the layer or film is formed only in a portion of the corresponding region in addition to a case where the layer or film is formed in the entirety of the corresponding region. For example, the surface of the layer or film may be defined as including a flat form, a non-flat form, and a combination thereof; or a continuous form, a discontinuous form, and a combination thereof. For example, when another member is composed of a layer or film directly on one member, the coverage of the other member with respect to the surface of the one member may be defined as 1% or more, 5% or more, 10% or more, 20% or more, 30% or more, 40% or more, 50% or more, 60% or more, 70% or more, 80% or more, 85% or more, 90% or more, 95% or more, or 99% or more.

In this specification, the average particle diameter of particles may be defined as a particle diameter $D_{50}$ when the cumulative percentage in the volume-based particle size distribution curve is 50% when measured by a laser diffraction particle size distribution measuring device.

In this specification, the weight average molecular weight is a molecular weight converted to standard polystyrene and may be analyzed through a gel permeation chromatography (GPC) device. Here, the GPC analysis method may use tetrahydrofuran as a developing solvent and may be performed under the analysis conditions of a sample concentration of 5 mg/mL, a sample introduction amount of 100 μl, a temperature of 40°C, and a flow rate of 1 mL/min.

According to one aspect of the present disclosure, there is provided a separator for a secondary battery, including: a preliminary separator including a porous substrate and a coating layer disposed on one surface of the porous substrate; a first binder layer disposed on one surface of the coating layer; and a second binder layer disposed on the other surface of the porous substrate; wherein the first binder layer and the second binder layer each include the same or different surfactants, and satisfy Equation 1 below.

[Equation 1]

$$\Delta P(s/100cc)=|Ps-Pc|<120$$

In Equation 1, Ps is an air permeability of the separator for a secondary battery, and Pc is an air permeability of the preliminary separator.

When a conventional binder slurry was coated on the surface of a preliminary separator, the surface energies of the porous substrate and the coating layer were different, resulting in different wettability of both surfaces. Because of this, when coating the binder slurry on the surface of the preliminary separator, there was a problem in that it was difficult to coat evenly. The ease of coating can be improved to some extent when adding a surfactant to the binder slurry in order to control the wetting, but the surfactant blocks the pores of the preliminary separator or deforms the shape of the binder in the coating layer so that there have been problems in that air permeability increases, and the resistance of the cell increases. Therefore, the uniform coatability of the binder slurry and the resistance of the cell have a trade-off relationship in which the other performance decreases if one performance increases, making it difficult to achieve both performances.

According to one aspect of the present disclosure, $\Delta P(s/100cc)=|Ps-Pc|<120$ is satisfied, and the surfactant is included in the binder layer so that the ease of coating of the binder slurry may be improved, and at the same time, a new parameter that reduces the resistance of the cell may be proposed. If $\Delta P(s/100cc)=|Ps-Pc|<120$ is not satisfied, the coatability of the binder slurry may be excellent even if a surfactant is included in the binder layer, but the resistance of the cell including the separator may increase excessively. When the binder layer does not include a surfactant even if $\Delta P(s/100cc)=|Ps-Pc|<120$ is satisfied, the coatability of the binder slurry may decrease to excessively increase the number of uncoated spots.

According to another aspect of the present disclosure, as a binder slurry containing an optimal amount of a surfactant is uniformly coated on one surface of the porous substrate or coating layer, the thickness of the separator can be reduced to increase the energy density of the secondary battery. At the same time, the adhesive force to the electrode increases when manufacturing an electrode assembly by heat and pressure so that defect phenomena such as folding of the separator can be effectively prevented.

Hereinafter, the configuration of the present disclosure will be described in more detail with reference to FIG. 1.

### 1. Separator for secondary battery

FIG. 1 is a vertical cross-sectional view of a separator for a secondary battery according to one embodiment of the present disclosure.

Referring to FIG. 1, the separator 100 for a secondary battery according to the present disclosure includes a preliminary separator 15, a first binder layer 30a, and a second binder layer 30b.

### Preliminary separator

The preliminary separator 15 according to the present disclosure includes a porous substrate 10 and a coating layer 20. Specifically, the preliminary separator 15 is composed of the porous substrate 10 and a coating layer 20 formed only on one surface of the porous substrate 10, and corresponds to a single-sided ceramic-coated separator (CCS).

### (Porous substrate)

The porous substrate 10 according to the present disclosure can provide a path for lithium ions to move while preventing short circuits by electrically insulating the anode and the cathode, and may be a porous structure with high resistance to electrolyte solutions and fine pore diameters.

As a constituent material of the porous substrate 10, any organic or inorganic material having electrical insulation properties may be used without particular restrictions. The porous substrate 10 may include, for example, at least one selected from the group consisting of polyolefin, polyethylene terephthalate, polybutylene terephthalate, polyacetal, polyamide, polycarbonate, polyimide, polyether ether ketone, polyether sulfone, polyphenylene oxide, polyphenylene sulfide, and polyethylene naphthalene, and may specifically include polyolefin. Polyolefin not only has excellent applicability, but it can also increase the capacity per volume by increasing the ratio of the electrode active material layer in the battery by thinning the separator. Specifically, polyolefin may have a weight average molecular weight $M_w$ of 100,000 to 500,000 g/mol. If the weight average molecular weight of polyolefin is less than the above numerical range, it may be difficult to secure sufficient mechanical properties, and if it exceeds the above numerical range, the shutdown function may not be implemented or molding may become difficult. The shutdown function refers to a function that blocks the movement of ions and prevents thermal runaway of the battery by dissolving the thermoplastic resin and thus closing the pores of the porous substrate when the temperature of the secondary battery increases.

In some examples, the porous substrate 10 may have a thickness of 3 to 50 $\mu$m or 4 to 15 $\mu$m. If the thickness of the porous substrate is less than the numerical range, the function of the conductive barrier may not be sufficient, and if it exceeds the numerical range, the resistance of the separator may excessively increase.

In some examples, the average diameter of pores included in the porous substrate 10 is not particularly limited and may specifically be 10 to 100 nm. Since the pores included in the porous substrate are formed in a structure in which they are connected to each other, gas or liquid may pass from one surface of the porous substrate to the other surface thereof.

**(Coating layer)**

The coating layer 20 according to the present disclosure can improve the mechanical strength and heat resistance of a separator for a secondary battery and increase the ionic conductivity within the secondary battery.

The coating layer 20 according to the present disclosure is disposed on one surface of the porous substrate 10. Specifically, since the coating layer 20 is disposed on only one surface of the porous substrate 10 so that the amount of electrode active material can be increased as much as the reduced thickness compared to both surfaces, it may be advantageous for the energy density of the battery.

In some embodiments of the present disclosure, the coating layer 20 may have a packing density of 0.1 to 20 $g/cm^3$, specifically 0.5 to 12 $g/cm^3$, and more specifically 1 to 3 $g/cm^3$. When the packing density of the coating layer satisfies a numerical range, the permeability of lithium ions may be advantageous, and the heat resistance of the separator may be maintained at an appropriate level. Meanwhile, the packing density is a density of the coating layer loaded at a height of 1 $\mu$m per unit area ($m^2$) of the porous substrate.

In some embodiments of the present disclosure, the coating layer 20 may have a thickness of 0.1 to 10 $\mu$m, specifically 1 to 3 $\mu$m, and more specifically 1.4 to 1.6 $\mu$m. When the thickness of the coating layer satisfies the above numerical range, the insulation properties and thermal stability of the separator can be increased, and the energy density of the battery can be improved at the same time.

The coating layer 20 according to the present disclosure may include a binder polymer and inorganic particles.

The binder polymer according to the present disclosure can connect and stably fix the inorganic particles. In some examples, the binder polymer may include one or mixtures of two or more selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinyl acetate, poly(ethylene-co-vinyl acetate), polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, acrylonitrile-styrene butadiene copolymer, polyimide, and styrene-butadiene rubber.

According to another embodiment of the present disclosure, the inorganic particles and the binder polymer (inorganic particles: binder polymer) may have a weight ratio of 50:50 to 99:1, specifically 70:30 to 95:5. If the content ratio of the inorganic particles to the binder polymer is less than the above numerical range, the content of the binder polymer increases so that the performance of improving thermal safety of the separator may decrease, pore size and porosity are reduced due to a decrease in the empty space formed between the inorganic particles so that deterioration in the performance of the final battery may be caused, and if the above numerical range is exceeded, the content of the binder polymer is too small so that the peeling resistance of the coating layer may be weakened.

The inorganic particles according to the present disclosure may contribute to improving the mechanical strength and heat resistance of a separator for a secondary battery. Specifically, the inorganic particles are not particularly limited as long as they are electrochemically stable. That is, the inorganic particles that can be used in the present disclosure are not particularly limited as long as they do not cause oxidation and/or reduction reactions in the operating voltage range (e.g., 0 to 5 V based on $Li/Li^+$) of the secondary battery to which they are applied.

As an example, when inorganic particles with a high dielectric constant are used as the inorganic particles, the ionic conductivity of the electrolyte solution can be improved by contributing to an increase in the degree of dissociation of electrolyte salts, such as lithium salts, in the liquid electrolyte. For the above-mentioned reasons, the inorganic particles may be inorganic particles having a dielectric constant of 5 or more, inorganic particles having lithium ion transfer ability, or a mixture thereof.

The inorganic particles having a dielectric constant of 5 or more may be one or mixtures of two or more selected from the group consisting of $Al_2O_3$, $SiO_2$, $ZrO_2$, $AlO(OH)$, $Al(OH)_3$, $Mg(OH)_2$, $BaSO_4$, $TiO_2$, $BaTiO_3$, $Pb(Zr_xTi_{1-x})O_3$ (PZT, where $0 < x < 1$), $Pb_{1-x}La_xZr_{1-y}Ti_yO_3$ (PLZT, where $0 < x < 1$, $0 < y < 1$), $(1-x)Pb(Mg_{1/3}Nb_{2/3})O_{3-x}PbTiO_3$ (PMN-PT, where $0 < x < 1$), $HfO_2$, $SrTiO_3$, $SnO_2$, $CeO_2$, $MgO$, $NiO$, $CaO$, $ZnO$, and $SiC$.

The inorganic particles having the lithium ion transfer ability may be one or mixtures of two or more selected from the group consisting of lithium phosphate ($Li3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$ series glass ($0 < x < 4$, $0 < y < 13$), lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), lithium nitride ($Li_xN_y$, $0 < x < 4$, $0 < y < 2$), $SiS_2$ series glass ($Li_xSi_yS_z$, $0 < x < 3$, $0 < y < 2$, $0 < z < 4$), and $P_2S_5$ series glass ($Li_xP_yS_z$, $0 < x < 3$, $0 < y < 3$, $0 < z < 7$).

For example, the inorganic particles may have an average particle diameter $D_{50}$ of 1 nm to 10 $\mu$m, specifically 10 nm to 2 $\mu$m, and more specifically 50 nm to 1 $\mu$m to form a coating layer of uniform thickness and appropriate porosity. The "average particle diameter $D_{50}$" refers to a particle diameter at 50% point of the particle number cumulative distribution according to the particle diameter. The average particle diameter may be measured using a laser diffraction method. Specifically, after dispersing the powder to be measured in a dispersion medium, it is introduced into a commercially available laser diffraction particle size measuring device (e.g., Microtrac S3500) to measure the difference in diffraction patterns according to particle size when the particles pass through the laser beam, thereby enabling the particle size distribution to be calculated.

First binder layer

When manufacturing an electrode assembly in which a separator and an electrode are stacked by applying heat and pressure, the first binder layer 30a according to one aspect of the present disclosure can improve the adhesive force of the separator to the electrode to improve the ease of assembly of the electrode assembly and prevent defects such as folding of the separator.

The first binder layer 30a according to the present disclosure is disposed on one surface of the coating layer 20. Specifically, the first binder layer 30a may have a thickness of 0.01 to 100 $\mu$m, specifically 0.05 to 20 $\mu$m, more specifically 0.05 to 10 $\mu$m, more specifically 0.2 to 1 $\mu$m, and more specifically 0.4 to 0.6 $\mu$m. When the thickness of the first binder layer 30a satisfies the above numerical range, the adhesive force of the separator to the electrode can be improved so that the ease of assembly of the electrode assembly is improved, and at the same time, the separator is prevented from becoming too thick, thereby preventing the energy density of the battery from decreasing.

The first binder layer 30a according to the present disclosure may contribute to the adhesive force of the separator to the electrode and include a particle-type binder dispersed in the binder slurry. The mobility of ions may be secured through the space between the particle-type binders by including the particle-type binder in the first binder layer, and coatability and adhesive force may be adjusted by adjusting the size of the particles.

For example, the particle-type binder may include: one compound selected from the group consisting of polyacrylate (PA), polyacrylic acid (PAA), poly(vinylidene fluoride) (PVDF), poly(vinylidene fluoride-co-hexafluoropropylene) (PVDF-HFP), poly(butyl acrylate) (PBA), polystyrene (PS), poly(methyl methacrylate) (PMMA), poly(ethylene oxide) (PEO), and polysiloxane; copolymers of two or more thereof; or mixtures of two or more thereof;

In some examples, the particle-type binder may have an average particle diameter $D_{50}$ of 30 to 3,000 nm, specifically 50 to 1,000 nm, and more specifically 100 to 800 nm.

According to another embodiment of the present disclosure, the particle-type binder may include a first particle-type binder and a second particle-type binder that is the same as or different from the first particle-type binder. The first and second particle-type binders may each independently be exemplary compounds for the above-described particle-type binders. As the particle-type binder is composed of two or more types of binders, during the manufacturing process of the battery assembly, occurrence of appearance defects in the cell can be effectively suppressed, and the adhesive force of the separator to the electrode can be further improved.

The first binder layer 30a according to the present disclosure includes a surfactant to control the wettability of the first binder slurry forming the first binder layer.

The surfactant according to the present disclosure may include a nonionic surfactant. Generally, surfactants are classified into anionic surfactants, cationic surfactants, amphoteric surfactants, and nonionic surfactants, and since secondary batteries operate by electrochemical reactions caused by the movement of lithium ions, nonionic surfactants may be desirable. For example, the nonionic surfactant may be one, or two or more selected from the group consisting of perfluoroalkyltriethyleneoxide methylether whose alkyl groups have 6 carbon atoms, polyoxyethylene alkyl ether, polyoxyethylene fatty acid ester, polyoxyethylene alkyl phenol ether, sorbitan fatty acid esters, polyoxyethylene sorbitan fatty acid esters, sucrose fatty acid esters, polyfluorobutane sulfonate, and polyethylene oxide-polypropylene oxide copolymer.

The surfactant according to the present disclosure may be contained in an amount of more than 0 to less than 5.0 parts by weight, specifically 0.01 or more to less than 5.0 parts by weight, more specifically 0.05 or more to less than 4.0 parts by weight, more specifically 0.1 to 2.0 parts by weight, more specifically 1.0 to 2.0 parts by weight, more specifically 1.2 to 1.8 parts by weight, more specifically 1.3 to 1.6 parts by weight, and more specifically 1.4 to 1.6 parts by weight based on 100 parts by weight of the particle-type binder. According to one perspective, as the first binder slurry is uniformly coated on one surface of the coating layer when the content of the surfactant satisfies the above numerical range, the thickness of the separator can be reduced to increase the energy density of the secondary battery, and at the same time, the adhesive force to the electrode can be increased during the manufacture of the electrode assembly due to heat and pressure to effectively preventing defect phenomena such as folding of the separator. According to another perspective, when the surfactant content satisfies the above numerical range, the surfactant may not block the pores of the separator, and accordingly, an excessive increase in battery resistance can be effectively prevented.

Second binder layer

When manufacturing an electrode assembly in which a separator and an electrode are stacked by applying heat and pressure as in the first binder layer 30a, the second binder layer 30b according to the present disclosure can improve the adhesive force of the separator to the electrode to improve the ease of assembling an electrode assembly and prevent defects such as folding phenomena of the separator.

The first binder layer 30a and the second binder layer 30b according to the present disclosure may each include the same or different particle-type binders.

The first and second binder layers 30a and 30b each include the same or different surfactants. The content of the surfactant included in the second binder layer 30b according to the present disclosure may be the same as or different from the content of the surfactant included in the first binder layer 30a. That is, the surfactants may each independently be contained in an amount more than 0 to less than 5.0 parts by weight based on 100 parts by weight of the particle-type binder.

The thickness of the second binder layer 30b may be the same as or different from the thickness of the first binder layer 30a, and may be specifically the same. That is, the first and second binder layers may each independently have a thickness of 0.01 to 100 $\mu$m, specifically 0.05 to 20 $\mu$m, more specifically 0.05 to 10 $\mu$m, and more specifically 0.2 to 1 $\mu$m. For example, the first binder layer may have a thickness of 0.2 to 0.8 $\mu$m, and the second binder layer may have 0.7 to 1.3 $\mu$m.

The separator for a secondary battery according to the present disclosure satisfies Equation 1 below.

$$[\text{Equation 1}]$$

$$\Delta P(s/100cc) = |Ps - Pc| < 120$$

In Equation 1, Ps is an air permeability of the separator for a secondary battery, and Pc is an air permeability of the preliminary separator. According to one aspect of the present disclosure, when the absolute value of the difference between the air permeability of the separator for a secondary battery and the air permeability of the preliminary separator is less than 120, the resistance of the cell including the separator may be lowered. When the absolute value of the difference between the air permeability of the separator for a secondary battery and the air permeability of the preliminary separator is 120 or more, the resistance of the cell including the separator may excessively increase. For example, in order to measure the air permeability of the separator for a secondary battery and the air permeability of the preliminary separator, an air permeability measuring device commonly used in the relevant technical field (e.g., Asahi Seiko's EG01-55-1MR model) can be used. Specifically, the measurement sample is fixed to the hollow-type upper and lower tips of the air permeability measuring device, and the time it takes for 100 cc of air to pass through can be measured through a set differential pressure applied to the upper and lower tips.

According to one aspect of the present disclosure, $\Delta P(s/100cc) = |Ps - Pc| < 120$ is satisfied, and the surfactant is included in the binder layer, thereby providing new parameters that can improve the ease of coating the binder slurry, and at the same time, reduce the resistance of the cell. If $\Delta P(s/100cc) = |Ps - Pc| < 120$ is not satisfied, the coatability of the binder slurry may be excellent even if a surfactant is included in the binder layer, but the resistance of the cell including the separator may increase excessively. When the binder layer does not include a surfactant even if $\Delta P(s/100cc) = |Ps - Pc| < 120$ is satisfied, the coatability of the binder slurry may decrease to excessively increase the number of uncoated spots. According to another aspect of the present disclosure, as one surface of the porous substrate or coating layer is uniformly coated with a binder slurry containing an optimal amount of a surfactant, the thickness of the separator may be reduced to increase the energy density of the secondary battery, and at the same time, the adhesive force to the electrode may be increased during manufacturing of an electrode assembly by heat and pressure to effectively prevent defect phenomena such as folding of the separator.

## 2. Manufacturing method of separator for secondary battery

Another embodiment of the present disclosure may provide a method for manufacturing the separator for a secondary battery. The explanations that are repeated as in the above-described parts will be briefly explained or omitted.

The method for manufacturing a separator for a secondary battery according to the present disclosure may include steps of: coating one surface of the coating layer with a first binder slurry and then drying the first binder slurry to form the first binder layer; and coating the other surface of the porous substrate with a second binder slurry and then drying the second binder slurry to form the second binder layer.

As a method for coating the first binder slurry on one surface of the coating layer; or a method for coating the second binder slurry on the other surface of the porous substrate, various coating methods in the relevant technical field may be used without being particularly limited. For example, a gravure coating or slot die coating method may be used as a method for coating the first and second binder slurries.

Drying times and drying temperatures of the first and second binder slurries may each independently be, for example, 15 to 75°C for 5 to 180 minutes. However, in the actual process, it may be preferable that the drying times and drying temperatures of the first and second binder slurries are the same.

The method for manufacturing a separator for a secondary battery according to one embodiment of the present disclosure may satisfy Equation 2 below.

$$[\text{Equation 2}]$$

$$C_A < 50°$$

In Equation 2, $C_A$ is a contact angle of the first binder slurry to one surface of the coating layer at 25°C. In Equation 2, when the contact angle $C_A$ of the first binder slurry with respect to one surface of the coating layer is less than 50°, the first binder layer can be implemented with a uniform thickness without an uncoated area when coating. That is, when the contact angle $C_A$ of the first binder slurry with respect to one surface of the coating layer is 50° or more, an uncoated spot of 1 mm or more may occur.

The method for manufacturing a secondary battery according to another embodiment of the present disclosure may satisfy Equation 3 below.

$$[\text{Equation 3}]$$

$$C_B < 50°$$

In Equation 3, $C_B$ is a contact angle of the second binder slurry to the other surface of the porous substrate at 25°C. In Equation 3, when the contact angle $C_B$ of the second binder slurry with respect to the other surface of the porous substrate is less than 50°, the second binder layer can be implemented with a uniform thickness without an uncoated area when coating. That is, when the contact angle $C_B$ of the second binder slurry with respect to the other surface of the porous substrate is 50° or more, an uncoated spot of 1 mm or more may occur.

The contact angles of the first and second binder slurries may be measured under room temperature conditions, for example, using contact angle measuring equipment commonly used in the relevant technical field (e.g., Attension Theta Flex from Biolin Scientific).

## 3. Secondary battery

Another embodiment of the present disclosure may provide a secondary battery including: an anode; a cathode; a separator for a secondary battery, which is interposed between the anode and the cathode; and an electrolyte. The explanations that are repeated as in the above-described parts will be briefly explained or omitted.

According to another embodiment of the present disclosure, the first binder layer may be in contact with one of the anode and the cathode, and the second binder layer may be in contact with the other one of the anode and the cathode. As the first binder layer and the second binder layer come into contact with the electrode, the adhesive force of the separator to the electrode is improved, and thus the battery assembly manufacturing process may be easily performed.

## Anode

The anode according to the present disclosure may include an anode current collector and an anode active material layer disposed on at least one surface of the anode current collector. The anode active material layer may include an anode active material, a conductive material, and an anode binder.

The anode current collector may serve as a path of transferring electrons from the outside so that an electrochemical reaction occurs in the anode active material, or receiving electrons from the anode active material and sending them to the outside. For example, copper, stainless steel, aluminum, nickel, titanium, calcined carbon, or an aluminum or stainless steel surface treated with carbon, nickel, titanium, silver, etc. may be used as the anode current collector, and specifically, a transition metal that adsorbs carbon well, such as copper or nickel, may also be used as a current collector. For example, the anode current collector may have a thickness of 6 μm to 20 μm, but the thickness of the anode current collector is not limited thereto.

The anode active material may serve to store or release lithium ions and generate electricity. For example, the anode active material may include at least one of silicon-based active material particles and graphite-based active material particles.

One or more selected from the group consisting of Si, $SiO_x$ (0<x≤2), an Si-C composite, and an Si-Y alloy (Y is any one element selected from the group consisting of alkali metals, alkaline earth metals, transition metals, Group 13 elements, Group 14 elements, and rare earth elements) may be used as the silicon-based active material particles.

The graphite-based active material particles may include one or more selected from the group consisting of artificial graphite, natural graphite, graphitized carbon fiber, and graphitized mesocarbon microbeads.

The content of the anode active material may be 80 to 97% by weight based on the total solid content contained in the anode active material layer.

The conductive material can improve conductivity between active material particles in the electrode or with metal current collectors and prevent the binder from acting as an insulator. The conductive material may be, for example, one conductive material or mixtures of two or more conductive materials selected from the group consisting of graphite, carbon black, carbon fiber, metal fiber, metal powder, conductive whisker, conductive metal oxide, activated carbon, and polyphenylene derivatives, and more specifically, one conductive material or mixtures of two or more conductive materials selected from the group consisting of natural graphite, artificial graphite, super-p, acetylene black, Ketjen black, channel black, furnace black, lamp black, summer black, Denka black, aluminum powder, nickel powder, zinc oxide, potassium titanate, and titanium oxide.

The anode binder can suppress separation between anode active material particles or between the anode and the current collector. Polymers commonly used in electrodes in the relevant technical field can be used as the anode binder. Nonlimiting examples of such an anode binder may include poly(vinylidene fluoride co-hexafluoropropylene), poly(vinylidene fluoride-co-trichloroethylene), poly(methylmethacrylate), poly(ethylhexylacrylate), poly(butylacrylate), poly(acrylonitrile), poly(vinylpyrrolidone), poly(vinyl acetate), poly(ethylene-co-vinyl acetate), poly(ethylene oxide), polyacrylate, cellulose acetate, cellulose acetate butyrate, cellulose acetate propionate, cyano ethyl pullulan, cyano ethyl poly(vinylalcohol), cyanoethylcellulose, cyano ethylsucrose, pullulan, carboxyl methyl cellulose, etc., but are not limited thereto.

## Cathode

The cathode according to the present disclosure may include a cathode current collector and a cathode active material layer disposed on at least one surface of the cathode current collector. The cathode active material layer may contain a cathode active material, a conductive material, and a cathode binder.

For example, the cathode current collector is not particularly limited as long as it has high conductivity without causing chemical changes in the battery. Specifically, copper, stainless steel, aluminum, nickel, titanium, calcined carbon, a copper or stainless steel surface treated with carbon, nickel, titanium, silver, etc., an aluminum-cadmium alloy, etc., may be used as the cathode current collector. The cathode current collector may typically have a thickness of 6 to 20 μm.

For example, the cathode active material may include a lithium transition metal oxides. The lithium transition metal oxide may be one or more selected from the group consisting of $Li_{x1}CoO_2$ (0.5<x1<1.3), $Li_{x2}NiO_2$ (0.5<x2<1.3), $Li_{x3}MnO_2$ (0.5<x3<1.3), $Li_{x4}Mn_2O_4$ (0.5<x4<1.3), $Li_{x5}(Ni_{a1}Co_{b1}Mn_{c1})O_2$ (0.5<x5<1.3, 0<a1<1, 0<b1<1, 0<c1<1, a1+b1+c1=1), $Li_{x6}Ni_{1-y1}Co_{y1}O_2$ (0.5<x6<1.3, 0<y1<1), $Li_{x7}Co_{1-y2}Mn_{y2}O_2$ (0.5<x7<1.3, 0≤y2<1), $Li_{x8}Ni_{1-y3}Mn_{y3}O_2$ (0.5<x8<1.3, 0≤y3<1), $Li_{x9}(Ni_{a2}Co_{b2}Mn_{c2})O_4$ (0.5<x9<1.3, 0<a2<2, 0<b2<2, 0<c2<2, a2+b2+c2=2), $Li_{x10}Mn_{2-z1}Ni_{z1}O_4$ (0.5<x10<1.3, 0<z1<2), $Li_{x11}Mn_{2-z2}Co_{z2}O_4$ (0.5<x11<1.3, 0<z2<2), $Li_{x12}CoPO_4$ (0.5<x12<1.3), and $Li_{x13}FePO_4$ (0.5<x13<1.3).

The conductive material used in the cathode may be the same as or different from the conductive material used in the anode.

The cathode binder may be the same as or different from the anode binder.

## Electrolyte solution

The electrolyte solution according to the present disclosure may include a solvent and a lithium salt.

The solvent according to the present disclosure may be, for example, one or mixtures of two or more selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone, ethyl methyl carbonate (EMC), gamma-butyrolactone (GBL), fluoroethylene carbonate (FEC), methyl formate, ethyl formate, propyl formate, methyl acetate, ethyl acetate, propyl acetate, pentyl acetate, methyl propionate, ethyl propionate, ethyl propionate, and butyl propionate.

The lithium salt according to the present disclosure may include anions such as, for example, $NO_3^-$, $F^-$, $Cl^-$, $Br^-$, $I^-$, and $PF_6^-$.

The secondary battery according to the present disclosure may be a cylindrical, prismatic, or pouch-shaped secondary battery, but is not particularly limited as long as it corresponds to a charge/discharge device.

Another embodiment of the present disclosure may provide a battery module including the secondary battery as a unit cell and a battery pack including the same. The battery pack may be used as, for example, a power source for one or more medium-to-large devices selected from the group consisting of: power tools; electric cars including an electric vehicle (EV), a hybrid electric vehicle (HEV), and a plug-in hybrid electric vehicle (PHEV); or power storage systems.

Hereinafter, Examples of the present disclosure will be described in detail so that those skilled in the art to which the present disclosure pertains can easily implement the present disclosure, but this is only one example, and the scope of rights of the present disclosure is not limited by the following contents.

**[Preparation of Example 1: Preparation of binder slurry]**

**<Preparation of Comparative Example 1: Preparation of binder slurry that does not contain surfactant>**

After adding a first particle-type binder (average particle diameter $D_{50}$ of 500 nm) containing polyacrylate having a weight average molecular weight of 1,000 to 1,000,000 g/mol; and a second particle-type binder (average particle diameter $D_{50}$ of 150 nm) containing PVdF-HFP (content of HFP-derived monomers: 15% by weight) having a weight average molecular weight of 50,000 to 5,000,000 g/mol to a solvent (water) at a weight ratio of 5:5, stirring was performed to prepare a binder slurry of Preparation of Comparative Example 1 with a total solid content of 10% by weight.

**<Preparation of Comparative Example 2: Preparation of binder slurry containing surfactant exceeding the appropriate range>**

After adding a first particle-type binder (average particle diameter $D_{50}$ of 500 nm) containing polyacrylate having a weight average molecular weight of 1,000 to 1,000,000 g/mol; a second particle-type binder (average particle diameter $D_{50}$ of 150 nm) containing PVdF-HFP (content of HFP-derived monomers: 15% by weight) having a weight average molecular weight of 50,000 to 5,000,000 g/mol and a nonionic surfactant (perfluoroalkyltriethyleneoxide methyl ether of which an alkyl group has 6 carbon atoms) to a solvent (water) at a weight ratio of 5:5:0.5 (first particle-type binder: second particle-type binder: nonionic surfactant), stirring was performed to prepare a binder slurry of Preparation of Comparative Example 2 with a total solid content of 10% by weight.

**implementation of Preparation of Example 1: Preparation of binder slurry containing surfactant in appropriate range>**

A binder slurry was prepared in the same manner as in Preparation of Comparative Example 2 except that the weight ratio (first particle-type binder: second particle-type binder: nonionic surfactant) of the first particle-type binder, the second particle-type binder, and the nonionic surfactant was changed from 5:5:0.5 to 5:5:0.15 to prepare the binder slurry of Implementation of Preparation of Example 1 with a total solid content of 10% by weight.

**[Preparation of Example 2: Preparation of composition for forming coating layer]**

After adding poly(vinylidene fluoride-co-hexafluoropropylene) copolymer ($M_w$=350,000 to 500,000 g/mol), which acts as a binder and has a hexafluoropropylene-derived monomer content of 15% by weight, to acetone (solvent), it was dissolved at 60°C for 1 hour to prepare a polymer solution (solid content = 25% by weight). After adding inorganic particles ($Al_2O_3$) with an average particle diameter $D_{50}$ of 0.1 $\mu$m to the polymer solution, the inorganic particles were crushed and pulverized by a ball mill for 12 hours or more to prepare a composition (total solid content: 30% by weight) for forming a coating layer in which poly(vinylidene fluoride-co-hexafluoropropylene) copolymer and $Al_2O_3$ were mixed at a weight ratio of 1:9.

**[Preparation of Example 3: Preparation of preliminary separator (single-sided CCS)]**

After coating the composition for forming a coating layer according to Preparation of Example 2 on one surface of a polyethylene porous substrate with a thickness of 5.0 $\mu$m and a porosity of 40% by a slot-die coating method, it was dried at 140°C for 1 hour, and a coating layer with a thickness of 1.5 $\mu$m was coated thereon to prepare a single-sided ceramic-coated separator (CCS) corresponding to the preliminary separator.

**[Experimental Example 1: Measurement of contact angle of binder slurry to porous substrate or coating layer]**

After dropping the binder slurry (4 $\mu\ell$) according to Preparation of Example 1 on one surface of the porous substrate or coating layer respectively, contact angles of the binder slurry to one surface of the porous substrate or coating layer at room temperature were measured using contact angle measuring equipment (Attension Theta Flex from Biolin Scientific), and then the results are shown in Table 1 below.

**[Experimental Example 2: Number of spots which are not coated with second binder slurry on one surface of porous substrate]**

When the binder slurries according to Preparation of Example 1 were each coated on the surface of the porous substrate in the preliminary separator (single-sided CCS), the numbers of uncoated spots due to the decrease in wettability of the binder slurries were measured. Specifically, the numbers of spots with a diameter of 1 mm or more within a unit area of 10 cm x 10 cm were obtained and are shown in Table 1 below.

**[Manufacturing Example 1: Manufacturing of secondary battery]**

**<Comparative Example 1: Separator having binder slurry of Preparation of Comparative Example 1 coated on both surfaces of single-sided CCS>**

The binder slurry of Preparation of Comparative Example 1 was coated on both surfaces of the single-sided CCS according to Preparation of Example 3 by a gravure coating method, and then dried at 50°C for 10 minutes to form binder layers each having a thickness of 0.5 $\mu$m. As a result, the separator of Comparative Example 1 was finally manufactured.

**<Comparative Example 2: Separator having binder slurry of Preparation of Comparative Example 2 coated on both surfaces of single-sided CCS>**

A separator was manufactured in the same manner as in Comparative Example 1 except that the binder slurry of Preparation of Comparative Example 2 was used instead of the binder slurry of Preparation of Comparative Example 1.

**<Example 1: Separator having binder slurry of Implementation of Preparation of Example 1 coated on both surfaces of single-sided CCS>**

A separator was manufactured in the same manner as in Comparative Example 1 except that the binder slurry of Implementation of Preparation of Example 1 was used instead of the binder slurry of Preparation of Comparative Example 1.

**[Experimental Example 3: Measurement of air permeabilities of single-sided CCS and separator]**

Asahi Seiko's EG01-55-1MR model was used as an air permeability measurement device. Specifically, the preliminary separator (single-sided CCS), the separators of Comparative Examples 1 and 2 and Example 1 were each fixed to the hollow-type upper and lower tips of the air permeability measuring device, the time it took for 100 cc of air to pass through was measured through a set differential pressure applied to the upper and lower tips so that air permeabilities were obtained, and the results are shown in Table 1 below.

**[Experimental Example 4: Measurement of resistance of cell including separator]**

Each coin cell was manufactured by interposing the separators of Comparative Examples 1 and 2 and Example 1 between SUS. An electrolyte containing 1M LiPF$_6$ and having ethylene carbonate and ethyl methyl carbonate mixed at a volume ratio of 1:2 was injected into the coin cells. To measure resistances of the coin cells, the resistances were measured through electrochemical impedance spectroscopy analysis results at 25°C under the conditions of Amplitude of 10 mV and Scan range of 0.1 Hz to 1 MHz using VMP3 from BioLogic Science Instrument, and the results are shown in Table 1 below. The resistance of the coin cell is preferably 1.0 $\Omega$ or less.

[Table 1]

| Classification | Comparative Example 1 | Comparative Example 2 | Example 1 |
|---|---|---|---|
| Porous substrate thickness ($\mu$m) | 5.0 | 5.0 | 5.0 |
| Coating layer thickness ($\mu$m) | 1.5 | 1.5 | 1.5 |
| First binder layer thickness ($\mu$m) | 0.5 | 0.5 | 0.5 |

(continued)

| Classification | Comparative Example 1 | Comparative Example 2 | Example 1 |
|---|---|---|---|
| Second binder layer thickness ($\mu$m) | 0.5 | 0.5 | 0.5 |
| Surfactant content (parts by weight)[1] | 0 | 5 | 1.5 |
| Contact angle of the second binder slurry to the porous substrate (°) | 50.7 | 29.2 | 35.3 |
| Contact angle of the first binder slurry to the coating layer (°) | 24.1 | 18.4 | 21.0 |
| $\Delta P(s/100cc)=|Ps-Pc|$[2] | 92 | 186 | 102 |
| Resistance of the cell ($\Omega$) | 0.86 | 1.27 | 0.56 |
| Number of uncoatings | 17 | 0 | 0 |
| 1) Content of surfactant: Content of surfactant with respect to 100 parts by weight of particle-type binder<br>2) Ps is the air permeability of a separator for a secondary battery, and Pc is the air permeability of the preliminary separator (single-sided CCS). | | | |

Referring to Table 1, when $\Delta P(s/100cc)=|Ps-Pc|<120$ is satisfied and the surfactant is contained in the first and second binder layers, respectively, in an amount of more than 0 to less than 5.0 parts by weight based on 100 parts by weight of the particle-type binder, the wettability of the binder slurry may be optimally adjusted to prevent excessive increase in air permeability by blocking the pores of the single-sided CCS (preliminary separator), and accordingly, the resistance of the cell may be reduced resultingly.

In addition, as a binder slurry containing an optimal amount of a surfactant is uniformly coated on one surface of the porous substrate or coating layer, the energy density of the secondary battery may be increased by reducing the thickness of the separator, and at the same time, the adhesive force to the electrode increases when manufacturing an electrode assembly by heat and pressure so that defect phenomena such as folding of the separator may be effectively prevented.

Considering the above experimental results comprehensively, a new parameter that can improve the ease of coating the binder slurry and reduce resistance of the cell at the same time by satisfying $\Delta P(s/100cc)=|Ps-Pc|<120$ and including the surfactant in the binder layer could be confirmed. If $\Delta P(s/100cc)=|Ps-Pc|<120$ is not satisfied, the coatability of the binder slurry may be excellent even if a surfactant is included in the binder layer, but the resistance of the cell including the separator may increase excessively. When the binder layer does not include a surfactant even if $\Delta P(s/100cc)=|Ps-Pc|<120$ is satisfied, the coatability of the binder slurry may decrease to excessively increase the number of uncoated spots. In addition, as a binder slurry containing an optimal amount of a surfactant is uniformly coated on one surface of the porous substrate or coating layer, the energy density of the secondary battery may be increased by reducing the thickness of the separator, and at the same time, the adhesive force to the electrode increases when manufacturing an electrode assembly by heat and pressure so that defect phenomena such as folding of the separator may be effectively prevented.

Although the preferred embodiments of the present disclosure have been described in detail above, the scope of rights of the present disclosure is not limited thereto, and various modifications and improved forms of those skilled in the art using the basic concept of the present disclosure defined in the following claims also fall within the scope of the rights of the present disclosure.

[Explanation of reference numerals]

    100: Separator for secondary battery
    10: Porous substrate
    15: Preliminary separator
    20: Coating layer
    30a: First binder layer
    30b: Second binder layer

**Claims**

1.   A separator for a secondary battery, comprising:

a preliminary separator comprising a porous substrate and a coating layer disposed on one surface of the porous substrate;

a first binder layer disposed on one surface of the coating layer; and

a second binder layer disposed on the other surface of the porous substrate;

wherein the first binder layer and the second binder layer each comprise the same or different surfactants, and satisfy the following Equation 1:

[Equation 1]

$$\Delta P(s/100cc)=|Ps-Pc|<120$$

In Equation 1, Ps is an air permeability of the separator for a secondary battery, and Pc is an air permeability of the preliminary separator.

2. The separator for a secondary battery of claim 1, wherein the first binder layer and the second binder layer each include the same or different particle-type binders.

3. The separator for a secondary battery of claim 2, wherein the particle-type binder includes a first particle-type binder and a second particle-type binder that is the same as or different from the first particle-type binder.

4. The separator for a secondary battery of claim 3, wherein the first and second particle-type binders each independently include: one compound selected from the group consisting of polyacrylate, polyacrylic acid, poly(vinylidene fluoride), poly(vinylidene fluoride-co-hexafluoropropylene), poly(butyl acrylate), polystyrene, poly(methyl methacrylate), poly(ethylene oxide), and polysiloxane; copolymers of two or more thereof; or mixtures of two or more thereof;

5. The separator for a secondary battery of claim 2, wherein the surfactants are each independently contained in an amount of more than 0 to less than 5.0 parts by weight based on 100 parts by weight of the particle-type binder.

6. The separator for a secondary battery of claim 1, wherein the surfactants include a nonionic surfactant.

7. The separator for a secondary battery of claim 6, wherein the nonionic surfactant is one, or two or more selected from the group consisting of perfluoroalkyltriethyleneoxide methylether whose alkyl groups have 6 carbon atoms, polyoxyethylene alkyl ether, polyoxyethylene fatty acid ester, polyoxyethylene alkyl phenol ether, sorbitan fatty acid esters, polyoxyethylene sorbitan fatty acid esters, sucrose fatty acid esters, polyfluorobutane sulfonate, and polyethylene oxide-polypropylene oxide copolymer.

8. The separator for a secondary battery of claim 1, wherein the coating layer has a thickness of 0.1 to 10 μm.

9. The separator for a secondary battery of claim 1, wherein the first and second binder layers each independently have a thickness of 0.05 to 10 μm.

10. A method for manufacturing a separator for a secondary battery according to claim 1, the method comprising steps of:

coating one surface of the coating layer with a first binder slurry and then drying the first binder slurry to form the first binder layer; and

coating the other surface of the porous substrate with a second binder slurry and then drying the second binder slurry to form the second binder layer;

11. The method of claim 10, wherein the following Equation 2 is satisfied:

[Equation 2]

$$C_A<50°$$

In Equation 2, $C_A$ is a contact angle of the first binder slurry to one surface of the coating layer at 25°C.

**12.** The method of claim 10, wherein the following Equation 3 is satisfied:

$$[\text{Equation 3}]$$

$$C_B < 50°$$

In Equation 3, $C_B$ is a contact angle of the second binder slurry to the other surface of the porous substrate at 25°C.

**13.** A secondary battery comprising:

an anode;
a cathode;
the separator for a secondary battery according to claim 1, which is interposed between the anode and the cathode; and
an electrolyte;

**FIG. 1**

| | |
|---|---|
| **INTERNATIONAL SEARCH REPORT** | International application No. |
| | **PCT/KR2023/017147** |

**A. CLASSIFICATION OF SUBJECT MATTER**

**H01M 50/457**(2021.01)i; **H01M 50/403**(2021.01)i; **H01M 50/489**(2021.01)i; **H01M 50/411**(2021.01)i; **H01M 50/42**(2021.01)i; **H01M 50/426**(2021.01)i; **H01M 10/04**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 50/457(2021.01); B32B 27/14(2006.01); B32B 27/32(2006.01); H01M 50/40(2021.01); H01M 50/403(2021.01); H01M 50/409(2021.01); H01M 50/411(2021.01); H01M 50/446(2021.01); H01M 50/449(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(second battery), 분리막(separator), 코팅층(coating layer), 바인더층 (binder layer), 계면활성제(surface active agent), 통기도(air-permeability)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2022-0045903 A (LG ENERGY SOLUTION, LTD.) 13 April 2022 (2022-04-13)<br>See paragraphs [0013]-[0033] and [0099]-[0184], claim 15 and figure 3. | 1-13 |
| Y | KR 10-2022-0082772 A (SK INNOVATION CO., LTD. et al.) 17 June 2022 (2022-06-17)<br>See claim 12. | 1-13 |
| A | KR 10-2018-0080229 A (JNC CORPORATION et al.) 11 July 2018 (2018-07-11)<br>See claims 1-3. | 1-13 |
| A | KR 10-2021-0010244 A (LG CHEM, LTD.) 27 January 2021 (2021-01-27)<br>See claims 1-10. | 1-13 |
| A | KR 10-2022-0009917 A (LG ENERGY SOLUTION, LTD.) 25 January 2022 (2022-01-25)<br>See claims 1-9. | 1-13 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**14 February 2024** | Date of mailing of the international search report<br><br>**15 February 2024** |
| Name and mailing address of the ISA/KR<br><br>**Korean Intellectual Property Office<br>Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/017147**

| Patent document cited in search report | | | Publication date (day/month/year) | Patent family member(s) | | | Publication date (day/month/year) |
|---|---|---|---|---|---|---|---|
| KR | 10-2022-0045903 | A | 13 April 2022 | CN | 115885419 | A | 31 March 2023 |
| | | | | EP | 4152505 | A1 | 22 March 2023 |
| | | | | JP | 2023-525824 | A | 19 June 2023 |
| | | | | US | 2023-0344082 | A1 | 26 October 2023 |
| | | | | WO | 2022-075658 | A1 | 14 April 2022 |
| KR | 10-2022-0082772 | A | 17 June 2022 | CN | 116569403 | A | 08 August 2023 |
| | | | | EP | 4246698 | A1 | 20 September 2023 |
| | | | | JP | 2023-553141 | A | 20 December 2023 |
| | | | | WO | 2022-124853 | A1 | 16 June 2022 |
| KR | 10-2018-0080229 | A | 11 July 2018 | CN | 108349197 | A | 31 July 2018 |
| | | | | EP | 3369567 | A1 | 05 September 2018 |
| | | | | JP | WO2017-073598 | A1 | 16 August 2018 |
| | | | | TW | 201728455 | A | 16 August 2017 |
| | | | | US | 2018-0311930 | A1 | 01 November 2018 |
| | | | | WO | 2017-073598 | A1 | 04 May 2017 |
| KR | 10-2021-0010244 | A | 27 January 2021 | None | | | |
| KR | 10-2022-0009917 | A | 25 January 2022 | CN | 115769431 | A | 07 March 2023 |
| | | | | EP | 4152508 | A1 | 22 March 2023 |
| | | | | US | 2023-0207968 | A1 | 29 June 2023 |
| | | | | WO | 2022-015118 | A1 | 20 January 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220143298